# EUROPEAN PATENT SPECIFICATION

(11) **EP 3 964 395 B1**
(45) Date of publication and mention of the grant of the patent: **17.07.2024**
(21) Application number: 20305982.9
(22) Date of filing: 04.09.2020
(51) Int. Cl.: B60R 1/00

(54) **A METHOD AND SYSTEM FOR ADAPTING TO A VEHICLE CONFIGURATION AN IMAGE DISPLAYED ON A MONITOR, AND VEHICLE USING SUCH SYSTEM**
EIN VERFAHREN UND EINE VORRICHTUNG ZUR ANPASSUNG EINES AUF EINEM BILDSCHIRM ANGEZEIGTEN BILDES AN EINER FAHRZEUGKONFIGURATION, UND FAHRZEUG AUFWEISEND EINE SOLCHE VORRICHTUNG
UN PROCÉDÉ ET UN DISPOSITIF POUR ADAPTER À UNE CONFIGURATION D'UN VÉHICULE UNE IMAGE AFFICHÉE SUR UN ÉCRAN D'UN MONITEUR, ET VÉHICULE COMPRENANT UN TEL DISPOSITIF

(43) Date of publication of application: 09.03.2022
(73) Proprietor: VOLVO TRUCK CORPORATION, 405 08 Göteborg (SE)
(72) Inventor: BERNE, Nicolas, 38540 Heyrieux (FR)
(74) Representative: Germain Maureau

(56) References cited:
- WO-A1-2016/120874
- WO-A1-2019/210963
- JP-A- 2006 248 384
- US-A1- 2017 140 542
- US-A1- 2018 093 613
- US-B2- 7 898 434

## Description

The invention is used in heavy-duty vehicles, such as trucks, including a cab and a trailer that can be connected to the cab.

### BACKGROUND

A trend in industrial vehicles is to replace conventional mirrors by a camera assembly, which comprises a supporting arm mounted on the vehicle cab and a camera arranged on said supporting arm, for providing a captured image of an area located rearwards and along a vehicle side. An image, resulting from the processing of the captured image, can typically be displayed on a monitor inside the driver's compartment.

The camera assembly must be arranged to provide to the vehicle driver an appropriate image displayed on the monitor, to ensure good visibility, hence safety.

To that end, various systems have been provided to change the displayed image, based on the captured image, according to various parameters. Some parameters are vehicle parameters, such as the angle of the trailer relative to the cab.

Due to some front part shape of the truck (for example long nose cabin), support member of camera should protrude from the cabin to film correct area. Then, support member is more exposed to impact during driving and/or vibration.

US 7 898 434 relates to a display system and program. JP 2006 248384 relates to a vehicle periphery monitoring device. US 2018/093613 relates to a vehicle driving assist system. WO2019/210963, which is the closest prior art document, relates to a heavy duty vehicle comprising :
a cabin having front wheels, rear wheels , a windscreen;
a system comprising a first camera carried by a first supporting member mounted on the cabin, said first camera being fixed along a centred longitudinal plan of the cabin below the bottom edge of the windscreen and configured to capture first images of a first area located forwards the cabin, whereby said first camera is part of a close proximity sensing device that detects objects which are very close to the front of the heavy-duty vehicle. WO2016/120874 relates to a vision system.

### SUMMARY

An object of the invention is to provide a method that provide an accurate view of the front area of the truck to the driver.

The object is achieved by a heavy-duty vehicle, as defined by claim 1.

Processed images from several camera assemblies provides a clear view of all blond spot in front of the truck and then reduce risk of impact with objects of pedestrian.

According to a one embodiment, processing the captured images of the first and second cameras comprises stitching horizontally the first and second images in a way that the area of the first images most distant from the cabin is adjacent to the area of the second images closest to the cabin.

According to further embodiment, processing the captured images of the first and second cameras comprises inserting the first images into the second images in a way that the area of the first images most distant from the cabin is adjacent to the area of the second images closest to the cabin.

A second object of the invention is to provide a method for adapting to a heavy-duty vehicle configuration an image displayed on a monitor in a cab of the vehicle that provide an accurate view of the front area of the truck to the driver.

The second object is achieved by a method, as defined by claim 2, for adapting to a heavy-duty vehicle configuration an image displayed on a monitor in a cab of the heavy-duty vehicle.

The heavy-duty vehicle comprises two camera assembly each comprising a supporting member mounted on the cab and a camera arranged on said supporting member, for providing a captured image of an area located forwards the cabin, characterized in that the system comprises
- the first supporting member is mounted on the cabin in a way that the fist camera captures first images of a first area located forwards the cabin
- the second supporting member is mounted on the cabin in a way that the second camera capturing second images of a second area located forwards the cabin,
- at least part of the second area is located in front of the first area in relation to the cabin.
- a controller capable of automatically processing the captured images of the first and second cameras to display first and second images at the same time on the monitor.

The second camera is fixed on the top of the cabin near to the top edge of the cabin.

The first camera is fixed below the bottom edge on the windscreen.

The first and second camera are fixed along a centred longitudinal plan of the cabin.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a vehicle according to the invention, and
Fig. 2 is a schematic view on processed displayed captured images.

### DETAILED DESCRIPTION OF EXAMPLE EMBODIMENTS OF THE INVENTION

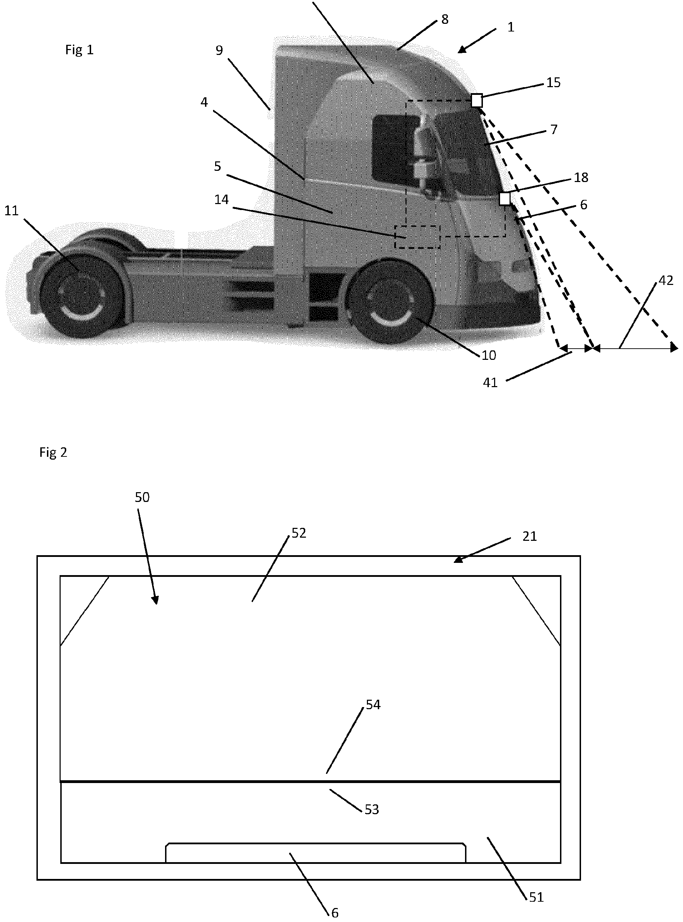

Fig. 1 show a vehicle 1.

The vehicle 1 comprises a cab 2 defining a driver's compartment 3. The cab 2 has side walls 4 each comprising a door 5, a front wall 6 including a windscreen 7, a top wall 8 and a rear wall 9. The cab 2 further comprises front wheels 10, and rear wheels 11. There may be provided one rear wheel or two rear wheels on each side of the cab 2.

Z is defined as the vertical direction, X is defined as the longitudinal direction of the vehicle 1, and Y is defined as the transversal direction of the vehicle 1.

The vehicle 1 may comprise an electrical control unit (ECU) 14 for controlling the various electric systems of the vehicle 1.

The vehicle 1 also comprises at least two camera assembly 15, 18 mounted on the cab 2, typically on the front wall 6 of the cab 2. According of the invention, a first camera assembly 15 is mounted on the top of the front wall 4 of the cab 2 for example above the windscreen 7. Alternatively, the first camera assembly is mounted near the top edge and behind the windscreen 7. The second camera assembly 18 is mounted bellow the first camera assembly 18. More particularly, the second camera assembly 18 is mounted on or below the lower edge of the windshield 7. The first and/or the second camera assembly 15, 18 are mounted on the middle of the front wall 4. In other word, the first camera assembly 15 are mounted in the middle top of the front wall 4 and the second camera assembly are mounted on the middle of the lower edge of the windshield 7.

Basically, each camera assembly 15, 18 comprises a supporting member and a camera arranged on said supporting member for providing a captured image 51, 52 of an area surrounding the vehicle 1, more specifically an area located in front of the vehicle 1.

The camera assemblies 15, 18 are oriented downwardly to capture images in a front area of the truck 1. More particularly, the camera assemblies 15, 18 are oriented to capture the ground in front of the truck. According to the invention, the first respectively the second camera assemblies 15,18 capturing first respectively the second images of a first 41 respectively second 42 area 41 located forwards the cabin and the second camera assembly 18 capturing second images of a second 42 areas located forwards the cabin. In addition, at least part of the second area 42 is located in front of the first area 41 in relation to the cabin. In other words, the first area 41 is closer to the front wall 4 of the truck then the second area 42.

The width of area 41, 42 correspond at least to the width of the cab 2 and extend transversally on each side of the cab. The depth of area 41, 42 is up to several meter in front of the cab 2. The general shape of each area is for example a rectangle but could be alsa round shape like ellipse. Captured images 51, 52 of these areas 41, 42 are then processed to fit with the size of the monitor. As example, captured images 51, 52 of these areas 41, 42 could be re-sized and/or crop.

As an example, the first camera assembly 15 is a part of close proximity sensing device that detect objet very close to the front of the truck. The second camera assembly 18 can typically be part of a so-called camera monitoring system (CMS) which further includes a monitor 21 inside the driver's compartment 3 for displaying an image based on the captured image provided by the second camera 18.

The camera monitoring system and the close proximity sensing device also each includes a controller. Each controller can be connected to the ECU 14.

According to the invention, the vehicle 1 comprises a system for adapting an image displayed on the monitor 21, based on the captured images 51, 52 from de camera assemblies 15, 18. The main objective of the system is to process captured images 51, 52 of camera assemblies 15, 18 to create an image of a large area in front of the truck to display it on the monitor 21. In other words, the system processes captured images 51, 52 from camera assemblies 15, 18 to display them at the same time on the monitor 21.

The system comprises the ECU 14 on which is installed an image processing software. During operation, the controller of each camera assembly 15, 18 transmits the captured images 51, 52 in real-time to the ECU 14. Then, the image processing software analyse in real-time the captured images 51, 52 to create unique images 50. These images is then displayed on the monitor 21. In one embodiment, the image processing software assemble both captured images 51, 52 in a way that the area of the first images most distant from the cabin is adjacent to the area of the second images closest to the cabin. In other words, the image processing software assembles or stiches the top 53 of the first images 51 with the bottom 54 of the second images 52.

In another embodiment, the image processing software assemble both captured images 51, 52 in a way that first images is inserted in the second images.

It is to be understood that the present invention is not limited to the embodiments described above and illustrated in the drawings; rather, the skilled person will recognize that many changes and modifications may be made within the scope of the appended claims.

## Claims

1. A heavy-duty vehicle (1) comprising:
a cabin (2) having front wheels (10), rear wheels (11) a windscreen (7);
a system comprising:
i. a first camera (18) carried by a first supporting member mounted on the cabin (2), said first camera (18) being fixed along a centred longitudinal plan of the cabin (2) below the bottom edge of the windscreen (7) and configured to capture first images (51) of a first area (41) located forwards the cabin (2); the width of the first area corresponds at least to the width of the cabin (2) and extends transversally on each side of the cabin (2), said first camera (18) is part of a close proximity sensing device that detects objects which are very close to the front of the heavy-duty vehicle (1);
**characterised in that** there is provided
ii. a second camera (15) carried by a second supporting member mounted on the cabin (2), said second camera (15) being fixed along a centred longitudinal plan of the cabin (2) and configured to capture second images (52) of a second area (42) located forwards the cabin (2), at least part of the second area (42) being located in front of the first area (41) in relation to the cabin (2);
iii. a controller (14) capable of automatically processing the first (51) and second (52) images captured by the first (18) and second (15) cameras to display said first (51) and second (52) images at the same time on the monitor (21);
a monitor (21) located in the cab (2), for displaying an image (50) based on said first (51) and second (52) captured images;
- said second camera (15) is fixed on the top of the cabin (2) near to the top edge of the cabin (2); and
- the width of the second area corresponds at least to the width of the cabin (2) and extends transversally on each side of the cabin (2).

2. A method for adapting to the configuration of the heavy-duty vehicle (1) according to claim 1 the image (50) displayed on the monitor (21) located in the cab (2) of the heavy-duty vehicle (1), the method comprising:
a step of automatically processing the first (51) and second (52) images captured by the first (18) and second (15) cameras to display said first (51) and second (52) images at the same time on the monitor (21).

3. The method according to claim 2, in which the step of automatically processing the first (51) and second (52) images comprises stitching horizontally the first (51) and second (52) images in a way that the area of the first image (51) most distant from the cabin (2) is adjacent to the area of the second image (52) closest to the cabin (2).

4. The method according to claim 2, in which the step of automatically processing the first (51) and second (52) images comprises inserting the first image (51) into the second image (52) in a way that the area of the first image (51) most distant from the cabin (2) is adjacent to the area of the second image (52) closest to the cabin (2).

## Patentansprüche

1. Schwerlastfahrzeug (1), umfassend:
eine Kabine (2), die Vorderräder (10), Hinterräder (11), eine Windschutzscheibe (7) aufweist;
ein System, umfassend:
i. eine erste Kamera (18), die von einem ersten Tragelement getragen wird, das an der Kabine (2) angebracht ist, wobei die erste Kamera (18) entlang einer zentrierten Längsebene der Kabine (2) unterhalb der Unterkante der Windschutzscheibe (7) befestigt und so konfiguriert ist, dass sie erste Bilder (51) eines ersten Bereichs (41) aufnimmt, der sich vorderhalb der Kabine (2) befindet; die Breite des ersten Bereichs mindestens der Breite der Kabine (2) entspricht und sich quer auf jeder Seite der Kabine (2) erstreckt, die erste Kamera (18) Teil einer Nahbereichs-Erfassungsvorrichtung ist, die Objekte erkennt, die sich sehr nahe an der Vorderseite des Schwerlastfahrzeugs (1) befinden;
**dadurch gekennzeichnet, dass** Folgendes bereitgestellt ist
ii. eine zweite Kamera (15), die von einem zweiten Tragelement getragen wird, das an der Kabine (2) angebracht ist, wobei die zweite Kamera (15) entlang einer zentrierten Längsebene der Kabine (2) befestigt und so konfiguriert ist, dass sie zweite Bilder (52) eines zweiten Bereichs (42) aufnimmt, der sich vorderhalb der Kabine (2) befindet, wobei sich mindestens ein Teil des zweiten Bereichs (42) in Bezug auf die Kabine (2) vor dem ersten Bereich (41) befindet;
iii. eine Steuereinheit (14), die in der Lage ist, die ersten (51) und die zweiten (52) Bilder, die von der ersten (18) und der zweiten (15) Kamera aufgenommen werden, automatisch zu verarbeiten, um die ersten (51) und die zweiten (52) Bilder gleichzeitig auf dem Monitor (21) anzuzeigen;
einen Monitor (21), der sich in der Kabine (2) befindet, zum Anzeigen eines Bildes (50) auf Grundlage der ersten (51) und der zweiten (52) aufgenommenen Bilder;
- die zweite Kamera (15) an der Oberseite der Kabine (2) in der Nähe der Oberkante der Kabine (2) befestigt ist; und
- die Breite des zweiten Bereichs mindestens der Breite der Kabine (2) entspricht und sich quer auf jeder Seite der Kabine (2) erstreckt.

2. Verfahren zum Anpassen an die Konfiguration des Schwerlastfahrzeugs (1) nach Anspruch 1 des Bildes (50), das auf dem in der Kabine (2) des Schwerlastfahrzeugs (1) befindlichen Monitor (21) angezeigt wird, wobei das Verfahren umfasst:
einen Schritt des automatischen Verarbeitens der ersten (51) und der zweiten (52) Bilder, die von der ersten (18) und der zweiten (15) Kamera aufgenommen werden, um die ersten (51) und die zweiten (52) Bilder gleichzeitig auf dem Monitor (21) anzuzeigen.

3. Verfahren nach Anspruch 2, wobei der Schritt des automatischen Verarbeitens der ersten (51) und der zweiten (52) Bilder das horizontale Aneinanderfügen der ersten (51) und der zweiten (52) Bilder so umfasst, dass der Bereich des ersten Bildes (51), der am weitesten von der Kabine (2) entfernt liegt, an den Bereich des zweiten Bildes (52) angrenzt, der am nächsten an der Kabine (2) liegt.

4. Verfahren nach Anspruch 2, wobei der Schritt des automatischen Verarbeitens der ersten (51) und der zweiten (52) Bilder das Einfügen des ersten Bildes (51) in das zweite Bild (52) so umfasst, dass der Bereich des ersten Bildes (51), der am weitesten von der Kabine (2) entfernt liegt, an den Bereich des zweiten Bildes (52) angrenzt, der am nächsten an der Kabine (2) liegt.

## Revendications

1. Véhicule utilitaire lourd (1) comprenant :
une cabine (2) ayant des roues avant (10), des roues arrière (11) et un pare-brise (7) ;
un système comprenant :
i. une première caméra (18) portée par un premier élément de support monté sur la cabine (2), ladite première caméra (18) étant fixée le long d'un plan longitudinal centré de la cabine (2) en dessous du bord inférieur du pare-brise (7) et configurée pour capturer des premières images (51) d'une première zone (41) située à l'avant de la cabine (2) ; la largeur de la première zone correspond au moins à la largeur de la cabine (2) et s'étend transversalement de chaque côté de la cabine (2),
ladite première caméra (18) fait partie d'un dispositif de détection de proximité immédiate qui détecte les objets qui sont très proches de l'avant du véhicule utilitaire lourd (1) ;
**caractérisé en ce qu'**il est prévu
ii. une deuxième caméra (15) portée par un deuxième élément de support monté sur la cabine (2), ladite deuxième caméra (15) étant fixée le long d'un plan longitudinal centré de la cabine (2) et configurée pour capturer des deuxièmes images (52) d'une deuxième zone (42) située à l'avant de la cabine (2), au moins une partie de la deuxième zone (42) étant située devant la première zone (41) par rapport à la cabine (2) ;
iii. un dispositif de commande (14) capable de traiter automatiquement les premières (51) et deuxièmes (52) images capturées par la première (18) et la deuxième (15) caméras pour afficher lesdites premières (51) et deuxièmes (52) images en même temps sur le moniteur (21) ;
un moniteur (21) situé dans la cabine (2), pour afficher une image (50) sur la base desdites premières (51) et deuxièmes (52) images capturées ;
- ladite deuxième caméra (15) est fixée sur le dessus de la cabine (2) près du bord supérieur de la cabine (2) ; et
- la largeur de la deuxième zone correspond au moins à la largeur de la cabine (2) et s'étend transversalement de chaque côté de la cabine (2).

2. Procédé pour adapter à la configuration du véhicule utilitaire lourd (1) selon la revendication 1 l'image (50) affichée sur le moniteur (21) situé dans la cabine (2) du véhicule utilitaire lourd (1), le procédé comprenant :
une étape de traitement automatique des premières (51) et deuxièmes (52) images capturées par la première (18) et la deuxième (15) caméras pour afficher lesdites premières (51) et deuxièmes (52) images en même temps sur le moniteur (21).

3. Procédé selon la revendication 2, dans lequel l'étape de traitement automatique des premières (51) et deuxièmes (52) images comprend l'assemblage horizontal des premières (51) et deuxièmes (52) images de manière à ce que la zone de la première image (51) la plus éloignée de la cabine (2) soit adjacente à la zone de la deuxième image (52) la plus proche de la cabine (2).

4. Procédé selon la revendication 2, dans lequel l'étape de traitement automatique des premières (51) et deuxièmes (52) images comprend l'insertion de la première image (51) dans la deuxième image (52) de manière à ce que la zone de la première image (51) la plus éloignée de la cabine (2) soit adjacente à la zone de la deuxième image (52) la plus proche de la cabine (2).
